# EUROPÄISCHE PATENTSCHRIFT

(11) **EP 2 211 225 B1**
(45) Veröffentlichungstag und Bekanntmachung des Hinweises auf die Patenterteilung: **17.04.2013**
(21) Anmeldenummer: 09014859.4
(22) Anmeldetag: 01.12.2009
(51) Int. Cl.: G02C 1/04

(54) **Brillenfassung**
Spectacle frame
Monture de lunettes

(30) Priorität: 21.01.2009 DE 102009005633
(43) Veröffentlichungstag der Anmeldung: 28.07.2010
(73) Patentinhaber: Markus Temming Holding GmbH,, 33334 Gütersloh (DE)
(72) Erfinder: Markus Temming, 3334 Gütersloh (DE)
(74) Vertreter: Rolf, Gudrun

(56) Entgegenhaltungen:
- EP-B1- 0 096 112
- WO-A1-95/18986
- US-A1- 2001 017 686

## Beschreibung

Die Erfindung betrifft eine Brille, bestehend aus zwei Brillengläsern und einer Brillenfassung aus einer Glashalterung für jedes der beiden Brillengläser, mit einem Haltekräfte erzeugenden Faden hoher Zug- und geringer Dehnfähigkeit, dessen Enden am Gestell oder im Randbereich eines Brillenglases festgelegt sind.

Solche Brillengestelle sind beispielsweise aus der DE 27 15 755 A1 bekannt, die zwei Fassungen für zwei Brillengläser aufweisen sowie zwei Fäden, die jeweils die untere Hälfte des Umfangs eines Brillenglases umfassen und an den Enden an den Fassungen festgelegt sind.

Nachteilig an diesem bekannten Brillengestell ist, dass die Fäden einen V-förmigen bzw. einen keilnutartigen Querschnitt sowie als Spannwülste ausgebildete Enden aufweisen müssen, so dass zur Variation von Glasgrößen unterschiedlich lange Fäden vorgehalten werden müssen, ebenso wie die Montage und Demontage der Brillengläser eine erhöhte Aufmerksamkeit und gesteigerte handwerkliche Fertigkeit verlangt.

Des Weiteren ist eine Brille mit auswechselbaren Sichtscheiben bekannt, EP 0096112 B1 bei der ein Faden eines Glases mittels eines mechanischen Fadenzugankers gespannt wird oder ein für beide Gläser gemeinsamer Faden mittels mehrerer mechanisch zusammenwirkender Bauteile, wie etwa eine Spannklammer, einen Verriegelungsbügel und einen Verriegelungshebel.

Eine andere bekannte Brillenfassung, US 2001/0017686 A1, besitzt zur Befestigung jeweils eines Glases jeweils einen Faden mit durch endseitige Knoten vorbestimmter Länge, die an der Brillenfassung festgelegt und nicht gespannt werden können.

Die in der WO95/18986 veröffentlichte Brille benutzt für jedes einzelne Glas mehrteilige mechanische Spannvorrichtungen wie Kniehebelverschlüsse oder aufwendige Schraubverbindungen für metallische Drähte als Glashalterung.

Aufgabe der Erfindung ist es, eine neuartige Brillenfassung einer Brille mit einer Glashalterung zur Verfügung zu stellen, die technisch einfachst aufgebaut und des Weiteren leicht zu handhaben ist. Ebenso soll ein einfacher Faden Verwendung finden können, der entsprechend seiner benötigten Länge von einer Rolle abgelängt werden kann.

Die Lösung dieser Aufgabe ergibt sich in Verbindung mit den Oberbegriffsmerkmalen erfindungsgemäß aus dem kennzeichnenden Teil des ersten Patentanspruchs insbesondere dadurch, dass der Faden eine Länge aufweist, welches größer ist als der Umschlingungsweg des Fadens zwischen seinen endseitigen Befestigungen um mindestens ein Brillenglas und dass an der Brillenfassung eine Spannvorrichtung für den Faden vorgesehen ist. Hierdurch lässt sich ein Brillenglas zunächst ohne Vorspannung in eine Brillenfassung einsetzen, der Faden ggf. in eine Längsausnehmung in den Rand eines Brillenglases einlegen und erst anschließend durch Betätigung der Spannvorrichtung das Brillenglas in der Brillenfassung befestigen.

Besonders vorteilhaft ist, dass die Befestigung des Fadenendes in bekannter einfacher Art und Weise durch eine oder mehrere Bohrungen in der Brillenfassung oder im Rand des Brillenglases vorgenommen werden kann, wobei der Faden selber aus einem schlichten kreisrunden Nylonfaden bestehen kann, der in der erforderlichen Länge von einer Rolle abgetrennt werden kann. Es müssen demnach für die Fertigung keine unterschiedlich langen Fäden oder Fäden mit einer bestimmten Querschnittsform bereitgehalten werden.

Die Spannvorrichtung ist dabei so einfach und einsichtig aufgebaut, dass ihre Funktion nicht nur sofort für jeden erkennbar ist, sondern sie lässt sich auch ohne die Verwendung von weiteren Werkzeugen mit den Fingern betätigen. Diese neuartige Glashalterung ist damit höchst einfach und sehr leicht handzuhaben und auch das Lösen eines Brillenglases erfolgt durch einfaches Entspannen der Spannvorrichtung, welches ebenfalls im Wesentlichen ohne die Verwendung von Werkzeugen durchführbar ist. Als einfaches Hilfsmittel kann hier beispielsweise ein dünner Plastikstreifen dienen, der unter den Faden entlang geführt und zu einer Schlaufe geknickt werden kann, über die der Faden mit einer seitlichen Zugkraft beaufschlagt aus der Spannvorrichtung herausgehoben werden kann.

Die Spannvorrichtung besteht aus einer einfachen Fadenumlenkung, um die der Faden nach dem Einsetzen eines Glases unter Erzeugung elastischer Haltekräfte herum gelegt wird.

Die Fadenumlenkung ist dabei besonders einfach herstellbar, da sie aus einem nach innen, zum Gesicht des Brillenträgers hin aus einer Ebene der Brillenfassung hervorstehenden Vorsprung ausgebildet sein kann, wobei in diesem Vorsprung eine Aufnahmenut für den Faden eingebracht ist, damit dieser bei jeder möglichen Beanspruchung der Brillenfassung in der Spannvorrichtung verbleibt.

Der Vorsprung lässt sich aus dem Grundmaterial der Brillenfassung herstellen, indem er an diese angeformt ist oder bei einer aus einem Metallblech gefertigten Brillenfassung aus deren Ebene nach innen umgefalzt ist, wobei in der oberen Kante des Vorsprunges im Falzbereich auch die Aufnahmenut vorgesehen sein kann. Die auf Grundlage dieser Gestaltungsvariante, der mit der Spannvorrichtung einteiligen Brillenfassung, herstellbaren Ausführungsformen sind extrem vielfältig.

Bei einer weiteren grundsätzlichen und ebenso vorteilhaften Gestaltungsvariante ist die Brillenfassung mit einem separaten Halteteil ausgestattet ist, welches den Vorsprung zur Verfügung stellt, in dem es beispielsweise von vorne durch eine Durchbrechung in der Brillenfassung in diese eingeführt ist und ein nach innen hervorstehender Absatz des Halteteiles den Vorsprung bildet, der ebenso wieder mit einer Aufnahmenut versehen ist. Hierdurch wird gleichzeitig das separate Halteteil am Herausrutschen aus der Brillenfassung entgegen der Einsteckrichtung verriegelt. Auch diese Gestaltungsvariante erlaubt eine Vielzahl von vorteilhaften Ausführungsformen.

Von besonderem Vorteil ist eine Ausführungsform der Erfindung, bei der die nach innen umgebogenen oder angeformten Teile der aus einem flachen Metallblech gefertigten Brillenfassung Nasenbügel bilden, die vorteilhafterweise so gestaltet sind, dass ihre Oberseiten in Form einer Rampe ausgeführt sind und am Ende der Rampe die Aufnahmenuten eingebracht sind, so dass zur Erzeugung der elastischen Haltekräfte der Faden ohne mechanische Beschädigungen zu erfahren einfach über die Rampen der Nasenbügel bis in die Aufnahmenuten bewegt werden kann, was insbesondere auch ohne die Verwendung von Werkzeug, sozusagen "kinderleicht" ausgeführt werden kann.

Bei einer besonders vorteilhaften Ausgestaltung des Gegenstandes der Erfindung sind beide Brillengläser von nur einem gemeinsamen Faden in der Brillenfassung festgelegt, wobei die Enden des Fadens in herkömmlicher Art und Weise entweder im Brillenglas oder in zu der Brillenfassung zugehörigen Teilen festgelegt sind und der Faden von einer Spannvorrichtung gehalten ist, die beispielsweise von jeweils zwei Nasenflügeln oder anderen hakenförmigen Aufnahmen der Brillenfassung gebildet werden oder von einer durchgängigen Aufnahme für den Faden zur Verfügung gestellt wird.

Bei einer bevorzugten Ausführungsform des Gegenstandes der Erfindung erstreckt sich der Faden über einen Großteil des unteren Randes eines Brillenglases und bildet somit selber einen Teil der Glashalterung, wobei bei einer anderen vorteilhaften Ausführungsform der Erfindung der Faden im Wesentlichen dazu dient, die sich nah gegenüberliegenden Bereiche einer ein Brillenglas fast vollständig umschließenden Brillenfassung so gegeneinander zu verspannen, dass ein Brillenglas fest darin gehalten wird.

Jede denkbare Zwischenlösung mit einem ein Brillenglas oder beide Brillengläser mehr oder weniger umschließenden Faden oder einer mehr oder weniger ein Brillenglas oder die Brillengläser umfassenden Brillenfassung ist hier denkbar, ebenso wie viele unterschiedliche Varianten der Spannvorrichtung konstruktiv verwirklicht werden können, wobei alle eine vollkommen neuartige Glashalterung zur Verfügung stellen, die technisch einfachst ausgeführt und von jedermann leicht zu handhaben ist, sei es beim Befestigen der Brillengläser oder beim Lösen der Glashalterung, welches im Wesentlichen ohne Werkzeuge durchführbar ist.

Nachfolgend sind einige Beispiele der Erfindung anhand von Zeichnungen näher beschrieben. Es zeigen:
- Fig. 1: eine räumliche Teilansicht einer Brillenfassung mit einem gleichzeitig zwei Brillengläser haltenden Faden,
- Fig. 2: eine Teilansicht der Brillenfassung gem. Fig. 1,
- Fig. 3: eine geschnittene Seitenansicht der Brillenfassung gem. den Fig. 1 und 2,
- Fig. 4: eine Teilansicht einer Brillenfassung mit variiertem Nasenbügel,
- Fig. 5: eine geschnittene Seitenansicht der Brillenfassung gem. Fig. 4,
- Fig. 6: eine Teilansicht einer Brillenfassung mit einer als separatem Bauteil ausgebildeten Spannvorrichtung,
- Fig. 7: eine geschnittene Seitenansicht der Brillenfassung gem. Fig. 8,
- Fig. 8: eine Ansicht einer Brillenfassung mit einem die Unterseiten zweier Brillengläser haltenden einzelnen Faden,
- Fig. 9: eine Ansicht einer Brillenfassung mit je einem Faden je Brillenglas und variierenden endseitigen Befestigungen des Fadens, und
- Fig. 10: eine Ansicht einer Brillenfassung mit die Brillengläser fast vollständig umgebenden Fassung und einem diese miteinander verspannenden Faden.

Eine entsprechend dem Erfindungsgedanken hergestellte Brille besteht aus einer Brillenfassung 1 für zwei Brillengläser mit einer Glashalterung für jedes der beiden Brillengläser mittels eines die Haltekräfte erzeugenden Fadens hoher Zug- und geringer Dehnfähigkeit, dessen Enden unmittelbar an der Brillenfassung 1 oder in einem Brillenglas festgelegt sind, wobei zur Vereinfachung des Verständnisses in den Figuren zu den unterschiedlichen Ausführungsformen ähnliche Grundbauteile mit den selben Bezugsziffern versehen sind.

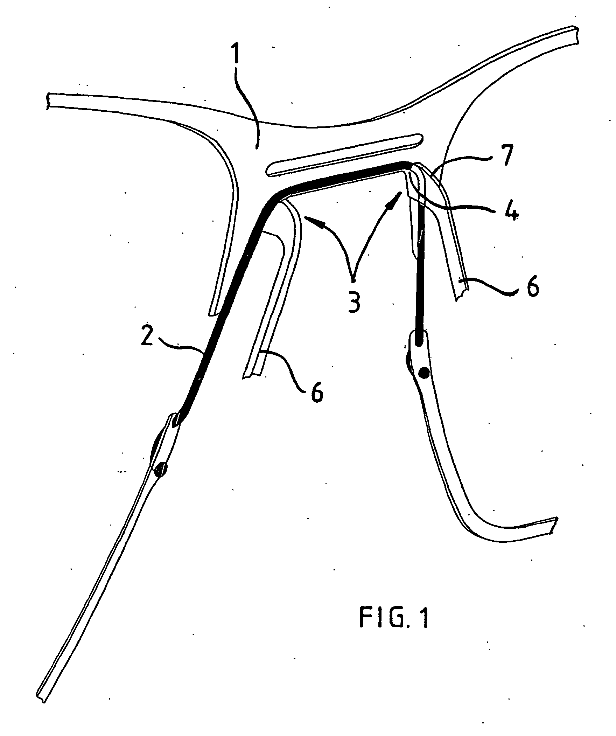

Allen Figuren gleich ist eine aus dünnem Titanblech ausgeformte Brillenfassung 1 mit zumindest die Brillengläser an ihren Oberseiten aufnehmenden Rändern mit einem diese verbindenden Verbindungssteg, wobei die Varianten der in den Fig. 1 bis 5 und 10 bis 12 dargestellten Brillenfassungen 1 jeweils aus einer Ebene des Titanbleches 1 nach innen bzw. zum Gesicht eines Brillenträgers hin umgebogene Vorsprünge 5 aufweist, die als Nasenflügel 6 ausgebildet sind und die an ihren nach oben gerichteten Stirnseiten Rampen 7 bilden, über die ein Faden 2 aufgeschoben werden kann, wo dieser unmittelbar von innen an der Brillenfassung 1 anliegt und in Aufnahmenuten 4 der Vorsprünge 5 eingerastet, die Brillengläser in der Brillenfassung hält.

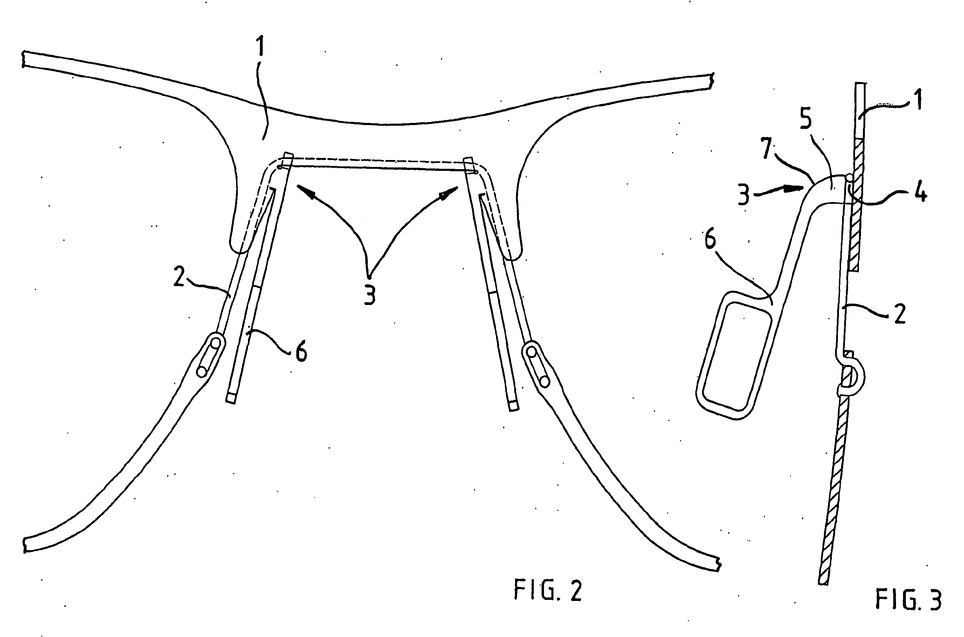

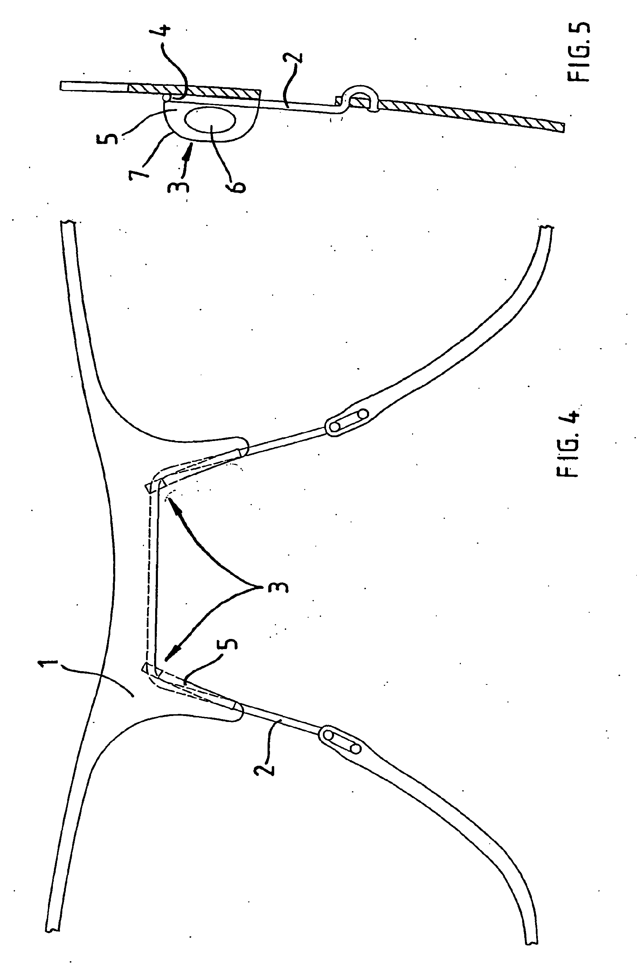

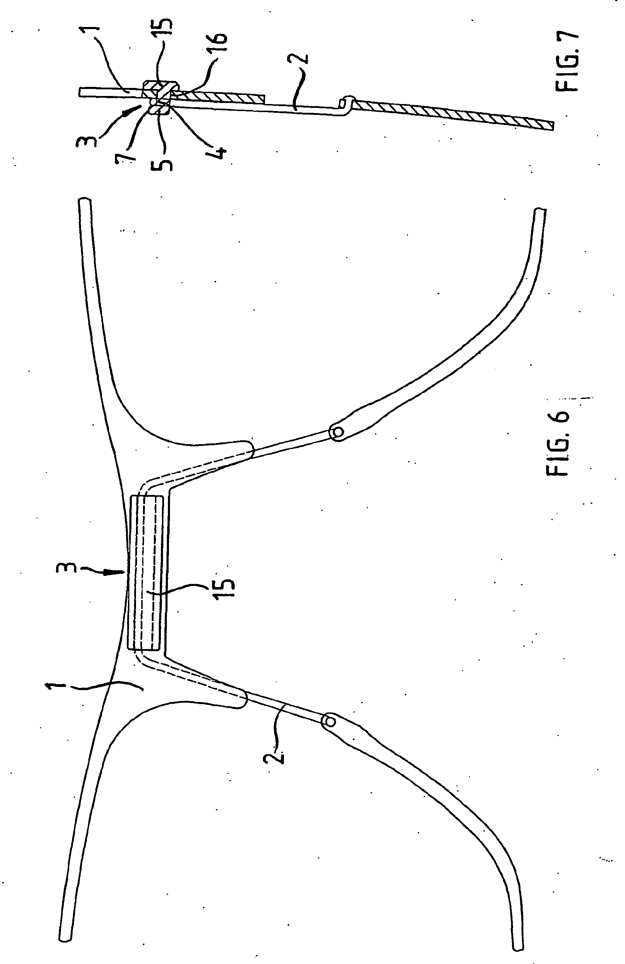

Die Vorsprünge 5 bilden somit die Spannvorrichtung für den Faden 2, der um die Vorsprünge 5 umgelenkt ist. Die Nasenflügel 6 können, wie in den Fig. 3 und 5 verdeutlicht ist, unterschiedlich groß ausgebildet sein oder, wie in den Fig. 7 gezeigt ist, auch ganz fehlen.

Eine Ausführungsform der Brillenfassung 1, wie sie in den Fig. 68-und 79 dargestellt ist, ist mit einem separaten Halteteil 15 ausgestattet, welches von vorne durch eine Durchbrechung 16 in der Brillenfassung 1 hindurch gesteckt ist und nach hinten einen Vorsprung 5 bildet, mit einer Aufnahmenut 4 für den Faden 2 und einer nach oben gerichteten, die Rampe 7 bildenden Stirnseite, über die der Faden 2 zur Erzeugung der elastischen Spannkraft bewegt werden muss.

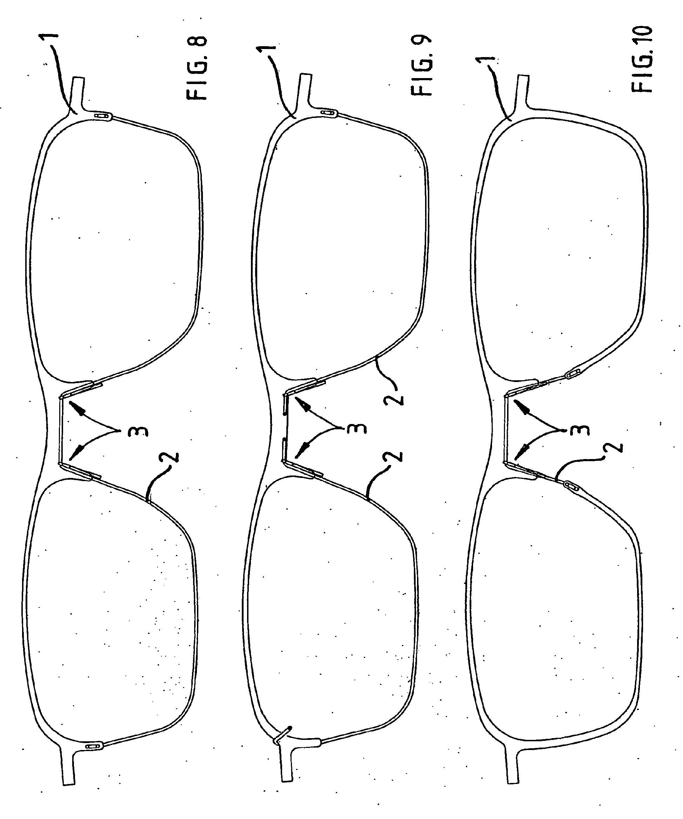

Die Fig. 8 bis 10 zeigen unterschiedliche Brillenfassungen 1, wobei in der Fig. 8 ein einzelner Faden 2 an den seitlichen Außenbereichen der Brillenfassung 1 festgelegt ist der die Brillengläser entlang ihrer Unterseite umfasst und im Bereich des Brückensteges der Brillenfassung 1 über die Spannvorrichtung 3 geführt ist. Die Brillenfassung 1 der Fig. 9 weist auf der linken Seite eine weitere Befestigungsvariante des Fadens 2 im Brillenglas auf, sowie jeweils einen Faden 2 je Brillenglas, um darzustellen, dass die erfinderische Glashalterung sich ebenfalls zur Befestigung einzelner Brillengläser eignet.

Das Brillengestell 1 der Fig. 10 zeigt nochmals, ähnlich wie die Fig. 4 und 5, eine Brillenfassung 1, die die Brillengläser fast vollständig umgibt und bei denen der Faden 2 im Wesentlichen dazu dient, die im Nasenbereich aufeinander zulaufenden Teile der Brillenfassung 1 gegeneinander zu verspannen, um den festen Halt der Brillengläser in der Brillenfassung 1 zu gewährleisten.

## Patentansprüche

1. Brille, bestehend aus zwei Brillengläsern und einer Brillenfassung aus einer Glashalterung für jedes der beiden Brillengläser mit einem Haltekräfte erzeugenden Faden (2) hoher Zug- und geringer Dehnfähigkeit, dessen Enden am Gestell oder an einem Brillenglas festgelegt sind, wobei der Faden (2) eine Länge aufweist, welche größer ist als der Umschlingungsweg des Fadens zwischen seinen endseitigen Befestigungen um mindestens ein Brillenglas und an der Brillenfassung (1) eine Spannvorrichtung (3) für den Faden (2) vorgesehen ist, die aus einer Fadenumlenkung besteht, um die der Faden (2) nach dem Einsetzen eines Glases unter Erzeugung elastischer Haltekräfte herum gelegt ist und die Fadenumlenkung eine Aufnahmenut (4) für den Faden (2) aufweist und aus mindestens einem nach innen, zum Gesicht des Brillenträgers hin aus einer Ebene der Brillenfassung (1) hervorstehenden Vorsprung (5) ausgebildet ist, **dadurch gekennzeichnet, dass** der Vorsprung (5) als separates, an der Brillenfassung (1) festgelegtes Halteteil (15) ausgebildet ist und dass in der Brillenfassung (1) mit separatem Halteteil eine Durchbrechung (16) vorgesehen ist, durch die sich das separate Halteteil (15) von außen nach innen erstreckt, welches einen frei nach innen hin hervorstehenden Vorsprung (5) aufweist, der mit der Aufnahmenut (4) versehen ist.

2. Brille, bestehend aus zwei Brillengläsern und einer Brillenfassung aus einer Glashalterung für jedes der beiden Brillengläser mit einem Haltekräfte erzeugenden Faden (2) hoher Zug- und geringer Dehnfähigkeit, dessen Enden am Gestell oder an einem Brillenglas festgelegt sind, wobei der Faden (2) eine Länge aufweist, welche größer ist als der Umschlingungsweg des Fadens zwischen seinen endseitigen Befestigungen um mindestens ein Brillenglas und an der Brillenfassung (1) eine Spannvorrichtung (3) für den Faden (2) vorgesehen ist, die aus einer Fadenumlenkung besteht, um die der Faden (2) nach dem Einsetzen eines Glases unter Erzeugung elastischer Haltekräfte herum gelegt ist und die Fadenumlenkung eine Aufnahmenut (4) für den Faden (2) aufweist und aus mindestens einem nach innen, zum Gesicht des Brillenträgers hin aus einer Ebene der Brillenfassung (1) hervorstehenden Vorsprung (5) ausgebildet ist, **dadurch gekennzeichnet, dass** der Vorsprung (5) einteilig an der Brillenfassung (1) angeformt ist und dass sie als einteilige Brillenfassung aus einer dünnen Platte, wie aus Metall oder Kunststoff ausgestanzt ist, und Nasenbügel (6) nach innen umgefalzt sind, wobei die oberen Kanten der Nasenbügel (6) im Falzbereich mit den Aufnahmenuten (4) versehen sind.

3. Brille nach Anspruch 2, **dadurch gekennzeichnet, dass** jeder Nasenbügel (6) auf derjenigen Seite, über die ein freier Abschnitt des Fadens (2) zur Erzeugung der elastischen Haltekräfte schiebbar ist, die Form einer Rampe (7) aufweist und am oberen Ende der Rampe (7) die Aufnahmenut (4) eingebracht ist.

4. Brille nach einem der vorgenannten Ansprüche, **dadurch gekennzeichnet, dass** beide Brillengläser von nur einem gemeinsamen Faden (4) in der Brillenfassung (1) festgelegt sind.

5. Brille nach einem der vorgenannten Ansprüche, **dadurch gekennzeichnet, dass** für jedes Brillenglas eine Fadenumlenkung an der Brillenfassung (1) vorgesehen ist.

6. Brille nach einem der vorgenannten Ansprüche, **dadurch gekennzeichnet, dass** der Faden (4) selber einen Teil der Glashalterung bildet und ein Glas oder beide Gläser teilweise umspannt.

7. Brille nach einem der vorgenannten Ansprüche 1 bis 5, **dadurch gekennzeichnet, dass** der Faden (4) der Glashalterung dienenden Teile der Brillenfassung (1) gegeneinander verspannt.

8. Brille nach Anspruch 6 und 7, **dadurch gekennzeichnet, dass** der Faden (4) die Brillengläser teilweise umspannt und teilweise der Glashalterung dienenden Teile der Brillenfassung (1) gegeneinander verspannt.

## Claims

1. Spectacles comprising two spectacle lenses and a spectacle frame made up of a lens holder for each of the two spectacle lenses, with a thread (2) which generates retaining forces, has high tension capability and low - expansion capability and of which the ends are secured in the framework or on a spectacle lens, wherein the thread (2) has a length which is greater than the wraparound path of the thread, between its end fastenings, around at least one spectacle lens, and the spectacle frame (1) has provided on it a tensioning device (3) for the thread (2), this device comprising a thread-deflecting means around which the thread (2) is placed following insertion of a lens, with elastic retaining forces being generated in the process, and the thread-deflecting means has an accommodating groove (4) for the thread (2) and is formed from at least one protrusion (5) which projects inwards, in the direction of the face of the person wearing the spectacles, from a plane of the spectacle frame (1), **characterized in that** the protrusion (5) is designed as a separate retaining part (15) secured on the spectacle frame (1), and **in that** the spectacle frame (1) with separate retaining part contains an aperture (16) through which the separate retaining part (15) extends inwards from the outside, this retaining part having a freely inwardly projecting protrusion (5) which is provided with the accommodating groove (4).

2. Spectacles comprising two spectacle lenses and a spectacle frame made up of a lens holder for each of the two spectacle lenses, with a thread (2) which generates retaining forces, has high tension capability and low expansion capability and of which the ends are secured in the framework or on a spectacle lens, wherein the thread (2) has a length which is greater than the wraparound path of the thread, between its end fastenings, around at least one spectacle lens, and the spectacle frame (1) has provided on it a tensioning device (3) for the thread (2), this device comprising a thread-deflecting means around which the thread (2) is placed following insertion of a lens, with elastic retaining forces being generated in the process, and the thread-deflecting means has an accommodating groove (4) for the thread (2) and is formed from at least one protrusion (5) which projects inwards, in the direction of the face of the person wearing the spectacles, from a plane of the spectacle frame (1), **characterized in that** the protrusion (5) is formed in one piece on the spectacle frame (1), and **in that** the spectacle frame is punched in one piece from a thin plate, for example made of metal or plastics material, and nosepieces (6) are folded over inwards, wherein the upper edges of the nosepieces (6) are provided with the accommodating grooves (4) in the fold region.

3. Spectacles according to Claim 2, **characterized in that** each nosepiece (6), on that side over which a free portion of the thread (2) can be pushed for the purpose of generating the elastic retaining forces, is in the form of a ramp (7), and the accommodating groove (4) is introduced at the upper end of the ramp (7).

4. Spectacles according to one of the preceding claims, **characterized in that** the two spectacle lenses are secured in the spectacle frame (1) by just one common thread (4).

5. Spectacles according to one of the preceding claims, **characterized in that** a thread-deflecting means is provided on the spectacle frame (1) for each spectacle lens.

6. Spectacles according to one of the preceding claims, **characterized in that** the thread (4) itself forms part of the lens holder and partially encompasses one or both lenses.

7. Spectacles according to one of preceding Claims 1 to 5, **characterized in that** the thread (4) braces in relation to one another the lens-holder parts of the spectacle frame (1).

8. Spectacles according to Claims 6 and 7, **characterized in that** the thread (4) partially encompasses the spectacle lenses and partially braces in relation to one another the lens-holder parts of the spectacle frame (1).

## Revendications

1. Lunettes, se composant de deux verres de lunettes et d'une monture de lunettes constituée d'un support de verre pour chacun des deux verres de lunettes avec un fil (2) d'extensibilité et de résistance à la traction élevées générant des forces de retenue, dont les extrémités sont fixées à la monture ou à un verre de lunettes, le fil (2) présentant une longueur qui est plus grande que le parcours d'enroulement du fil entre ses fixations côté extrémité autour d'au moins un verre de lunettes, et un dispositif tendeur (3) pour le fil (2) étant prévu sur la monture de lunettes (1), lequel dispositif tendeur est constitué d'une déviation de fil autour de laquelle le fil (2) est placé après l'insertion d'un verre en générant des forces de retenue élastiques, et la déviation de fil comprenant une rainure de réception (4) pour le fil (2) et étant réalisée à partir d'au moins une saillie (5) faisant saillie, vers l'intérieur, hors d'un plan de la monture de lunettes (1), en direction du visage du porteur de lunettes, **caractérisées en ce que** la saillie (5) est réalisée sous forme de partie de retenue séparée (15) fixée à la monture de lunettes (1) et **en ce qu'**un orifice (16) est prévu dans la monture de lunettes (1) dotée de la partie de retenue séparée, à travers lequel orifice la partie de retenue séparée (15) s'étend de l'extérieur vers l'intérieur, laquelle partie de retenue comprend une saillie (5) faisant saillie librement vers l'intérieur qui est pourvue de la rainure de réception (4).

2. Lunettes, se composant de deux verres de lunettes et d'une monture de lunettes constituée d'un support de verre pour chacun des deux verres de lunettes avec un fil (2) d'extensibilité et de résistance à la traction élevées générant des forces de retenue, dont les extrémités sont fixées à la monture ou à un verre de lunettes, le fil (2) présentant une longueur qui est plus grande que le parcours d'enroulement du fil entre ses fixations côté extrémité autour d'au moins un verre de lunettes, et un dispositif tendeur (3) pour le fil (2) étant prévu sur la monture de lunettes (1), lequel dispositif tendeur est constitué d'une déviation de fil autour de laquelle le fil (2) est placé après l'insertion d'un verre en générant des forces de retenue élastiques, et la déviation de fil comprenant une rainure de réception (4) pour le fil (2) et étant réalisée à partir d'au moins une saillie (5) faisant saillie, vers l'intérieur, hors d'un plan de la monture de lunettes (1), en direction du visage du porteur de lunettes, **caractérisées en ce que** la saillie (5) est formée d'une seule partie sur la monture de lunettes (1) et **en ce qu'**elle est découpée, en tant que monture de lunettes en une seule partie, dans une plaque mince par exemple en métal ou en plastique et des arceaux de nez (6) sont repliés vers l'intérieur, les bords supérieurs des arceaux de nez (6) étant pourvus des rainures de réception (4) dans la zone de pliage.

3. Lunettes selon la revendication 2, **caractérisées en ce que** chaque arceau de nez (6), sur le côté sur lequel on peut faire glisser une section libre du fil (2) pour générer les forces de retenue élastiques, présente la forme d'une rampe (7) et la rainure de réception (4) est ménagée sur l'extrémité supérieure de la rampe (7).

4. Lunettes selon l'une quelconque des revendications précédentes, **caractérisées en ce que** les deux verres de lunettes sont fixés dans la monture de lunettes (1) par seulement un fil commun (4).

5. Lunettes selon l'une quelconque des revendications précédentes, **caractérisées en ce qu'**une déviation de fil est prévue sur la monture de lunettes (1) pour chaque verre de lunettes.

6. Lunettes selon l'une quelconque des revendications précédentes, **caractérisées en ce que** le fil (4) lui-même forme une partie du support de verre et enserre partiellement un verre ou les deux verres.

7. Lunettes selon l'une quelconque des revendications 1 à 5, **caractérisées en ce que** le fil (4) met en tension les unes vis-à-vis des autres des parties de la monture de lunettes (1) servant de support de verre.

8. Lunettes selon la revendication 6 ou 7, **caractérisées en ce que** le fil (4) enserre partiellement les verres de lunettes et met en tension partiellement les unes vis-à-vis des autres des parties de la monture de lunettes (1) servant de support de verre.
